# EUROPÄISCHE PATENTSCHRIFT

(11) **EP 2 310 253 B1**
(45) Veröffentlichungstag und Bekanntmachung des Hinweises auf die Patenterteilung: **15.03.2017**
(21) Anmeldenummer: 09780464.5
(22) Anmeldetag: 10.07.2009
(51) Int. Cl.: B62J 35/00

(54) **SICHERHEITSSYSTEM MIT EINEM TANKVERSCHLUSS**
SAFETY SYSTEM HAVING A TANK CLOSURE
SYSTÈME DE SÉCURITÉ ASSOCIÉ À UN BOUCHON DE RÉSERVOIR

(30) Priorität: 11.07.2008 DE 102008032584
(43) Veröffentlichungstag der Anmeldung: 20.04.2011
(73) Patentinhaber: Huf Hülsbeck & Fürst GmbH & Co. KG, 42551 Velbert (DE)
(72) Erfinder: MÖNIG, Stefan, 58332 Schwelm (DE); BUSCHMANN, Gerd, 42553 Velbert (DE)
(74) Vertreter: Vogel, Andreas
(86) Internationale Anmeldenummer: PCT/EP2009/058863
(87) Internationale Veröffentlichungsnummer: WO 2010/004044

(56) Entgegenhaltungen:
- EP-A- 0 404 195
- EP-A- 1 524 178
- WO-A-2005/084987
- WO-A1-2008/081965
- DE-U1-202006 013 601
- JP-A- 2008 120 193
- US-A1- 2005 190 039
- US-A1- 2006 288 748
- US-B1- 6 279 626

## Beschreibung

Die Erfindung betrifft ein Sicherheitssystem mit einem Tankverschluss eines Motorrads, wobei der Tankverschluss in einen Entriegelungszustand und einen Verriegelungszustand bringbar ist, mit einer zum Verschließen einer Tanköffnung des Kraftstofftankes vorgesehenen Verschlusseinheit, die über einen Antrieb zwischen einer Schließposition, in der die Tanköffnung vollständig verschlossen ist, und einer Offenposition bewegbar ist, in der die Tanköffnung zum Befüllen des Kraftstofftankes freigegeben ist. Des Weiteren bezieht sich die Erfindung auf einen Tankverschluss sowie auf ein Verfahren einer schlüssellosen Zugangskontrolle für einen Tankverschluss.

In der DE 20 2006 013 601 U1 ist ein Tankverschluss für einen Kraftstofftank eines Kraftfahrzeuges offenbart, der ein Verschlusselement zum Verschließen der Tanköffnung des Kraftstofftankes aufweist. Hierbei ist das Verschlusselement von einer die Tanköffnung vollständig verschließenden Schließposition in eine die Tanköffnung für die Zuführung von Kraftstoff vollständig freigebenden Offenposition verstellbar. Die Bewegung des Verschlusselementes erfolgt über einen als Antrieb wirkenden Elektromotor. Der Antrieb ist über ein Schaltelement fernbedienbar. Ferner ist in der Schrift WO 2005/084987 A ebenfalls ein Sicherheitssystem mit einem Tankverschluss gezeigt.

Der nächstliegende bekanntgewordene Stand der Technik ist dem Dokument WO 2005/084987 zu entnehmen.

Der Erfindung liegt die Aufgabe zugrunde, eine verbesserte Zugangskontrolle zum Öffnen des Tankverschlusses eines Kraftstofftankes bereitzustellen.

Zur Lösung dieser Aufgabe wird ein Sicherheitssystem mit den Merkmalen des Anspruches 1 vorgeschlagen. Vorteilhafte Ausführungsformen des Sicherheitssystems sind in dem abhängigen Unteranspruch 3 aufgeführt.

Erfindungsgemäß ist vorgesehen, dass eine Kontrolleinheit, die mit dem Tankverschluss in Datenkommunikation steht, und ein Auslöseelement vorgesehen ist, das für eine Authentifizierungsabfrage der Kontrolleinheit aktivierbar ist, wobei nur bei einer positiven Authentifizierung der Tankverschluss in den Entriegelungszustand bringbar ist, bei dem die Verschlusseinheit in die Offenposition sich bewegt. Hierdurch wird bewirkt, dass lediglich die berechtigte Person den Tankverschluss öffnen kann. Die Kontrolleinheit kann beispielsweise Bestandteil eines Zugangs- und Fahrberechtigungskontrollsystems eines Kraftfahrzeuges sein, welches über ein Wecksignal und über eine Überprüfung von Identifikationsdatensignalen die genannte Authentifizierungsabfrage durchführt. Der Bediener muss lediglich das Auslöseelement aktivieren, um einen Öffnungsvorgang des Tankverschlusses auszulösen. Es ist beispielsweise denkbar, dass das Auslöseelement durch den Benutzer berührt oder manuell betätigt wird, beispielsweise, dass das Auslöseelement bewegt oder als Schalter gedrückt wird, wodurch die Authentifizierungsabfrage in Gang gesetzt wird. Neben dem erhöhten Bedienkomfort wird gleichzeitig die Zugangssicherheit zum Tankverschluss erhöht.

Erfindungsgemäß weist das Sicherheitssystem einen ID-Geber auf, den der Benutzer bei sich trägt, wobei die Authentifizierungsabfrage zwischen dem ID-Geber und der Kontrolleinheit erfolgt. In einer möglichen Ausführungsform wird nach der Aktivierung des Auslöseelementes ein Wecksignal zum ID-Geber weitergeleitet, wobei vorteilhafterweise eine Überprüfung innerhalb des ID-Gebers ebenfalls durchgeführt wird. Der ID-Geber sendet auf das Wecksignal hin über eine Sendeeinrichtung ein Antwortsignal in Form von Identifikationsdatensignalen als kodierte Nachricht an das Kraftfahrzeug, insbesondere ein Motorrad, zurück, die insbesondere durch die kraftfahrzeugseitige Empfangseinrichtung empfangen werden und der Kontrolleinheit weitergeleitet werden. Wenn die gesendeten Identifikationsdaten des ID-Gebers mit den kraftfahrzeugseitigen, feststehenden Identifikationsdaten übereinstimmen, liegt eine positive Authentifizierung vor, so dass der Tankverschluss in den Entriegelungszustand gebracht werden kann. In einer weiteren möglichen Ausführungsform der Erfindung kann die Kontrolleinheit auch im Tankverschluss integriert sein und unabhängig von einem Zugangs- und Fahrberechtigungskontrollsystem eines Kraftfahrzeuges arbeiten. Nachfolgend wird immer von einem Kraftfahrzeug geredet, bei dem es sich ausschließlich um ein Motorrad handeln kann.

Erfindungsgemäß ist das Auslöseelement auch an der Lenkungseinheit des Kraftfahrzeuges angeordnet.

Im Falle eines Motorrads als Kraftfahrzeug ist es denkbar, das Auslöseelement unmittelbar am Lenker des Motorrads zu positionieren und zwar an der Stelle, an der der Benutzer beispielsweise bequem mit seinem Daumen das Auslöseelement aktivieren kann.

Darüber hinaus wird die Aufgabe durch einen Tankverschluss für einen Kraftstofftank eines Kraftfahrzeuges mit den Merkmalen des unabhängigen Anspruches 3 gelöst.

Vorteilhafte Ausführungsformen des Tankverschlusses sind in den abhängigen Ansprüchen 4 bis 6 aufgeführt.

Vorteilhafterweise weist die Verschlusseinheit des erfindungsgemäßen Tankverschlusses einen Schalter auf, auf den das Auslöseelement nach einer manuellen Betätigung wirkt. Das Auslöseelement kann beispielsweise als Schutzklappe für einen Schließzylinder wirken, der im Tankverschluss integriert ist. Vorteilhafterweise kann das Auslöseelement zwischen einer Ruhestellung und einer Arbeitsstellung bewegt werden. In der Ruhestellung schirmt das Auslöseelement den Schließzylinder schützend ab. Eine Aktivierung des Auslöseelementes kann in der Art erfolgen, dass der Benutzer das Auslöseelement aus seiner Ruhestellung in die Arbeitsstellung bewegt, insbesondere verschwenkt. Über das Bewegen des Auslöseelementes wird ein Schalter betätigt, der ein Signal aussendet, wodurch die Authentifizierungsabfrage gestartet wird. Der Schalter kann beispielsweise eine Kontrolleinheit ansprechen, die diese genannte Authentifizierungsabfrage startet. Nach positiver Authentifizierung wird der Antrieb angesteuert, der beispielsweise ein mechanisches Riegelelement derart bewegt, dass der Tankverschluss aus dem Verriegelungszustand in den Entriegelungszustand gebracht wird.

Der Tankverschluss kann derart ausgestaltet sein, dass nach einer positiven Authentifizierung die Verschlusseinheit durch den Antrieb in ihre Offenposition "springt", wobei das Riegelelement zuvor den Tankverschluss in seinen Entriegelungszustand gebracht hat. Der Benutzer kann anschließend manuell die Verschlusseinheit weiter anheben bzw. aus der Offenposition weiter öffnen, um zuverlässig Kraftstoff über eine Kraftstoffzuführleitung in den Kraftstofftank zu leiten.

Ferner wird die Aufgabe durch ein Verfahren mit den Merkmalen des Anspruches 7 gelöst. In den abhängigen Ansprüchen 8 bis 11 sind vorteilhafte Ausführungen des Verfahrens beschrieben.

Erfindungsgemäß ist vorgesehen, dass über eine bewusste Aktivierung eines Auslöseelementes, das in Datenkommunikation mit einer Kontrolleinheit steht, eine Authentifizierungsabfrage der Kontrolleinheit aktiviert wird, und nur bei einer positiven Authentifizierung ein Signal einem am Tankverschluss angeordneten Antrieb übermittelt wird, der den Tankverschluss aus dem Verriegelungszustand in den Entriegelungszustand bringt. Es ist eine bewusste Handlung des Benutzers notwendig, das Auslöseelement zu aktivieren. Die Aktivierung des Auslöseelementes kann beispielsweise durch eine Annäherung, Berührung oder eine aktive Bewegung des Auslöseelementes erfolgen. Liegt eine negative Authentifizierung vor, verbleibt der Tankverschluss in seinem Verriegelungszustand. Bei einer positiven Authentifizierung wird durch die Kontrolleinheit dem Antrieb ein Signal übermittelt, der eine am Tankverschluss angeordnete Verschlusseinheit von der Schließposition in die Offenposition bewegt. Aus dieser Offenposition kann der Benutzer manuell die Verschlusseinheit weiter öffnen, um die Tanköffnung vollständig zum Befüllen des Kraftstofftankes freizugeben. In einer möglichen Ausführungsvariante fährt nach der Entriegelung des Tankverschlusses der Antrieb in seine Ausgangslage zurück, so dass eine erneute Entriegelung nach einem manuellen Schließen der Verschlusseinheit möglich ist.

Es ist in einer Ausführungsalternative möglich, dass die Authentifizierungsabfrage kapazitiv und/oder induktiv erfolgt. Erfindungsgemäß erfolgt die Authentifizierungsabfrage zwischen einem ID-Geber, den der Benutzer bei sich trägt und der Kontrolleinheit. Das Kraftfahrzeug sowie der ID-Geber sind mit Sende- und Empfangseinrichtungen ausgestattet, die Identifikationsdatensignale kapazitiv oder induktiv übertragen. Der ID-Geber kann sich in einem Kleidungsstück des Benutzers oder sogar in einem Koffer oder dergleichen befinden, der von dem Benutzer getragen wird, ohne dass Störungen während der Aussendung von Identifikationsdatensignalen zur Authentifizierungsabfrage auftreten.

Weitere Vorteile, Merkmale und Einzelheiten der Erfindung ergeben sich aus den Unteransprüchen, der nachfolgenden Beschreibung, in der unter Bezugnahme auf die Zeichnungen ein Ausführungsbeispiel der Erfindung im Einzelnen beschrieben ist. Dabei können die in den Ansprüchen und der Beschreibung erwähnten Merkmale jeweils einzeln für sich oder in beliebiger Kombination erfindungswesentlich sein. Es zeigen:
- Fig. 1: eine mögliche Ausführungsform eines Sicherheitssystems mit einem Tankverschluss,
- Fig. 2: den Tankverschluss gemäß Fig. 1 in einer Unteransicht,
- Fig. 3: der Tankverschluss gemäß Fig. 1, wobei das Auslöseelement sich in einer Arbeitsstellung befindet und
- Fig. 4: eine mögliche Ausführungsform eines erfindungsgemäßen Verfahrens einer schlüssellosen Zugangskontrolle für einen Tankverschluss.

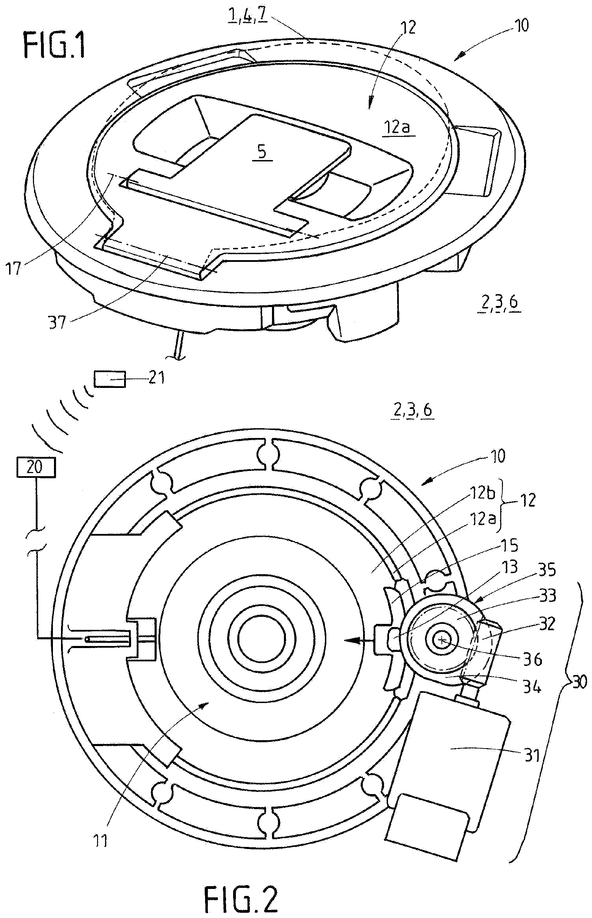

Die Figuren 1 bis 3 zeigen ein Sicherheitssystem mit einem Tankverschluss 10 eines nicht dargestellten Kraftstofftankes eines Motorrads. Der Tankverschluss 10 ist in einen Entriegelungszustand 1, der in Fig. 1 gestrichelt gezeigt ist, und in einen Verriegelungszustand 2 bringbar. Der Tankverschluss 10 weist eine zum Verschließen einer Tanköffnung 11 des Kraftstofftankes vorgesehene Verschlusseinheit 12 auf, die im vorliegenden Ausführungsbeispiel sich unter anderem aus einem Außendeckel 12a und einem Innendeckel 12b zusammensetzt.

Die Verschlusseinheit 12 kann über einen Antrieb 30 zwischen einer Schließposition 3, in der die Tanköffnung 11 vollständig verschlossen ist, und einer Offenposition 4 bewegt werden. In der Offenposition 4 ist die Tanköffnung 11 zum Befüllen des Kraftstofftankes freigegeben. Ferner ist eine Kontrolleinheit 20 am Motorrad vorgesehen, die mit dem Tankverschluss 10 in Datenkommunikation steht. Die Kontrolleinheit 20 kann beispielsweise Bestandteil einer Steuerelektronik eines Zugangs- und Fahrberechtigungskontrollsystems des Motorrads sein.

In der gezeigten Ausführungsform der Erfindung ist ein Auslöseelement 5 vorgesehen, das um eine Achse 17 schwenkbar an der Verschlusseinheit 12 angeordnet ist. Das Auslöseelement 5 dient als Schutzklappe für einen in der Verschlusseinheit 12 angeordneten Schließzylinder 16. Das Auslöseelement 5 weist auf seiner der Verschlusseinheit 12 zugewandten Seite ein angeformtes, ringförmiges Dichtelement 5a auf, welches in der Ruhestellung des Auslöseelementes 5, die in Fig. 1 gezeigt ist, den Schließzylinder 16 vor Umwelteinflüsse wie Staub, Feuchtigkeit ect. schützt.

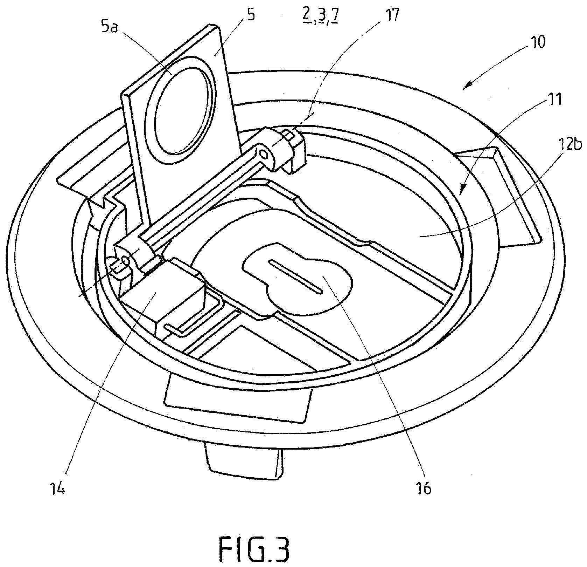

Damit lediglich eine berechtigte Person einen Zugang zum Kraftstofftank des Motorrads hat, ist das Sicherheitssystem derart ausgeführt, dass über eine Bewegung des Auslöseelementes 5 aus seiner Ruhestellung 6 gemäß Fig. 1 in eine Arbeitsstellung 7 gemäß Fig. 3 eine Authentifizierungsabfrage der Kontrolleinheit 20 aktiviert wird. Über diese bewusste Aktivierung, im vorliegenden Ausführungsbeispiel Bewegung des Auslöseelementes 5 um die Achse 17, erfolgt eine Authentifizierungsabfrage zwischen einem ID-Geber 21, den der Benutzer bei sich trägt, und der Kontrolleinheit 20. Im gezeigten Ausführungsbeispiel wird zunächst ein Wecksignal zum ID-Geber 21 ausgesendet, der wiederum Identifikationsdatensignale zum Kraftfahrzeug zurücksendet. Diese Identifizierungsdatensignale werden über nicht dargestellte Antennen empfangen und kraftfahrzeugseitig überprüft, inwieweit die gesendeten Identifizierungsdaten mit den kraftfahrzeugseitig gespeicherten Identifizierungsdaten übereinstimmen. Bei einer positiven Authentifizierung wird ein Signal einem am Tankverschluss 10 angeordneten Antrieb 30, der in Fig. 2 dargestellt ist, übermittelt, der den Tankverschluss 10 reversibel aus dem Verriegelungszustand 2 in den Entriegelungszustand 1 bringt. Anstelle einer manuellen Verschwenkung des Auslöseelementes 5 gemäß des dargestellten Ausführungsbeispiels ist es selbstverständlich denkbar, eine Aktivierung des Auslöseelementes 5 über einen Näherungssensor oder einen Berührungssensor erfolgen zu lassen. Ebenfalls ist es denkbar, das Auslöseelement 5 unabhängig von der Verschlusseinheit 12 an der Lenkungseinheit, insbesondere am Lenker des Motorrads, vorzusehen.

Wie in Fig. 2 gezeigt ist, ist an der Verschlusseinheit 12 ein mechanisches Riegelelement 15 angeordnet, auf das der Antrieb 30 wirkt. Das Riegelelement 15 ist hierbei federbelastet. Bei der positiven Authentifizierung erfolgt eine Ansteuerung des Antriebs 30, der einen Elektromotor 31 aufweist, der wiederum ein Schneckenrad 32 in Bewegung setzt. Das Schneckenrad 32 treibt ein um eine Achse 36 drehbar gelagertes Übertragungselement 35 an. Das Übertragungselement 35 weist hierbei einen Ritzel 33 auf, das in das Schneckenrad 32 eingreift. Des Weiteren ist das Übertragungselement 35 mit einer Hubkurve 34 ausgeführt, die auf das Riegelelement 15 entsprechend wirkt. Während des Entriegelungsvorganges 1 treibt der Elektromotor 31 das Übertragungselement 35 um seine Drehachse 36 an, wobei die Hubkurve 34 nach einem bestimmten Drehwinkel um die Achse 36 die Nase 13 des Riegelelementes 15 in Richtung der Tanköffnung 11 drückt (siehe Pfeil). Ist das Riegelelement 15 entsprechend weit in die Verschlusseinheit 12 bewegt worden, hebt die Verschlusseinheit 12 mit ihrem Außendeckel 12 und ihrem Innendeckel 12b automatisch aus der Tanköffnung 11 ab. Im vorliegenden Ausführungsbeispiel "springt" die Verschlusseinheit 12 aus ihrer Tanköffnung 11 nach oben. Die an der Verschlusseinheit 12 angeordneten Dichtungen unterstützen hierbei das "Hochspringen" der Verschlusseinheit 12.

Falls etwaige Störungen, Signalstörungen ect. auftreten sollten und eine Authentifizierungsabfrage somit nicht möglich ist, ist ein Notzugang über einen mechanischen Schlüssel, der am ID-Geber 21 angeordnet ist, ebenfalls möglich. Hierbei muss lediglich das Auslöseelement 5 manuell aus seiner Ruhestellung 6 in eine Arbeitsstellung bewegt werden. Anschließend kann der Notschlüssel in den Schließzylinder 16 eingeführt werden, wodurch eine mechanische Notentriegelung des Tankverschlusses 10 ebenfalls erzielbar ist. Der Schließzylinder 16 ist hierbei in Wirkverbindung mit dem Riegelelement 15.

Während das Auslöseelement 5 aktiviert wird, wirkt es auf einen Mikroschalter 14, der in Fig. 3 gezeigt ist, der wiederum ein entsprechendes Signal der Kontrolleinheit 20 sendet, um die oben beschriebene Authentifizierungsabfrage zu starten. Der Mikroschalter 14 ist zwischen dem Außendeckel 12a und dem Innendeckel 12b angeordnet.

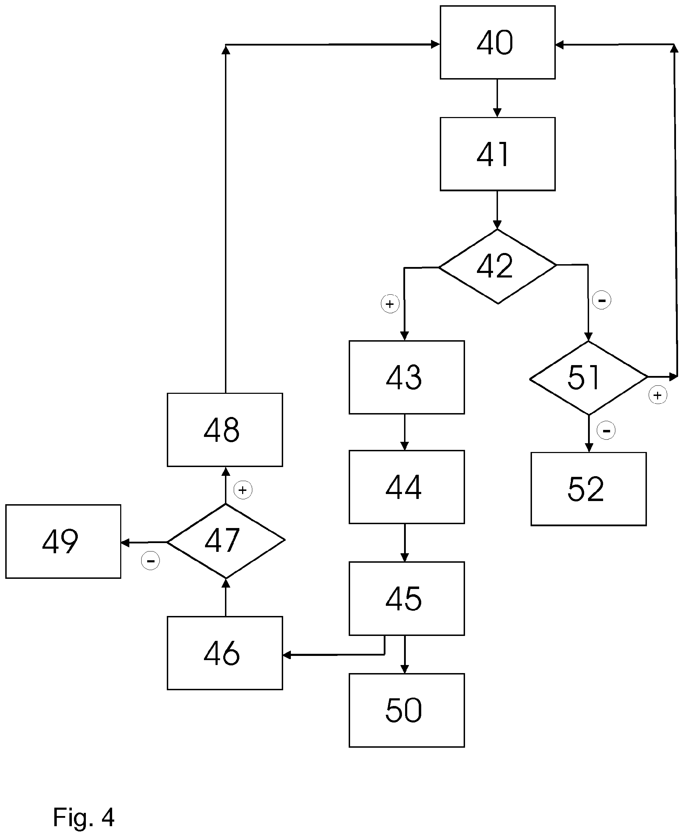

In Fig. 4 ist ein Ausführungsbeispiel des erfindungsgemäßen Verfahrens einer schlüssellosen Zugangskontrolle für den Tankverschluss des Motorrads dargestellt. Im ersten Verfahrensschritt 40 erfolgt zunächst eine Aktivierung des Auslöseelementes. Über die Bewegung des Auslöseelementes wird der Mikroschalter betätigt 41, wodurch eine Authentifizierungsabfrage 42 gestartet wird. Bei einer positiven Authentifizierung wird ein Startsignal dem Elektromotor gesendet 43. Hierdurch wird das Übertragungselement angetrieben, das in Wirkverbindung mit dem Riegelelement steht. Die Hubkurve des Übertragungselementes bewegt hierbei die Nase des Riegelelementes, so dass die Verschlusseinheit aus dem Verriegelungszustand in den Entriegelungszustand bewegt wird 44.

Im Entriegelungszustand springt der Außendeckel und der Innendeckel aus der Tanköffnung heraus. Der Benutzer kann nun manuell den Außendeckel mit dem Innendeckel in eine weitere Offenposition bewegen 45. Eine Befüllung 50 des Kraftstofftankes kann nun erfolgen. Gleichzeitig fährt nach der Entriegelung des Tankverschlusses der Elektromotor in seine Ausgangslage zurück 46, so dass eine erneute Entriegelung möglich ist.

Der Benutzer kann anschließend - nach dem Tankvorgang - die Verschlusseinheit in ihre Schließposition bewegen. Hierbei schnappt das Riegelelement arretierend ein, so dass in der Schließposition der Verschlusseinheit der Tankverschluss verriegelt ist. Das Verfahren zur schlüssellosen Zugangskontrolle überprüft 47, inwieweit die Schließposition/der Verriegelungszustand erreicht ist. Falls der Entriegelungszustand erreicht ist, erfolgt eine Rückmeldung 48 zur Kontrolleinheit, so dass eine erneute Aktivierung 40 des Auslöseelementes erfolgen kann. Ist die Schließposition noch nicht erreicht, wird eine erneute Aktivierung des Auslöseelementes blockiert 49.

Liegt eine negative Authentifizierung vor, wird über eine Sicherheitsabfrage 51 die Anzahl der negativen Authentifizierungen über eine definierte Zeiteinheit ausgewertet. Überschreitet die Anzahl der negativen Auswertungen innerhalb einer definierten Zeiteinheit einen Schwellenwert, erfolgt eine Blockierung 52 der möglichen Aktivierung des Auslöseelementes für eine gewisse Zeiteinheit.

### Bezugszeichenliste

- 1: Entriegelungszustand
- 2: Verriegelungszustand
- 3: Schließposition
- 4: Offenposition
- 5: Auslöseelement
- 5a: Dichtelement
- 6: Ruhestellung
- 7: Arbeitsstellung
- 10: Tankverschluss
- 11: Tanköffnung
- 12: Verschlusseinheit
- 12a: Außendeckel
- 12b: Innendeckel
- 13: Nase
- 14: Schalter
- 15: Riegelelement
- 16: Schließzylinder
- 17: Achse
- 20: Kontrolleinheit
- 21: ID-Geber
- 30: Antrieb
- 31: Elektromotor
- 32: Schneckenrad
- 33: Ritzel
- 34: Hubkurve
- 35: Übertragungselement
- 36: Achse
- 40: Aktivierung des Auslöseelementes
- 41: Ansprechen des Mikroschalters
- 42: Authentifizierungsabfrage
- 43: Ansteuerung des Motors
- 44: Entriegelungsvorgang
- 45: Manuelles Öffnen des Deckels
- 46: Zurückfahren des Elektromotors
- 47: Überprüfung der Position der Verschlusseinheit
- 48: Rückmeldung an die Kontrolleinheit
- 49: Blockierung
- 50: Befüllen des Tankes
- 51: Sicherheitsabfrage
- 52: Blockierung

## Patentansprüche

1. Sicherheitssystem mit einem Tankverschluss (10) eines Kraftstofftankes eines Motorrads, wobei der Tankverschluss (10) in einen Entriegelungszustand (1) und einen Verriegelungszustand (2) bringbar ist, mit
einer zum Verschließen einer Tanköffnung (11) des Kraftstofftankes vorgesehenen Verschlusseinheit (12), die über einen Antrieb (30) zwischen einer Schließposition (3), in der die Tanköffnung (11) vollständig verschlossen ist, und einer Offenposition (4) bewegbar ist, in der die Tanköffnung (11) zum Befüllen des Kraftstofftankes freigegeben ist,
und eine Kontrolleinheit (20), die mit dem Tankverschluss (10) in Datenkommunikation steht, **dadurch gekennzeichnet dass** ein Auslöseelement (5) vorgesehen ist, das für eine Authentifizierungsabfrage der Kontrolleinheit (20) aktivierbar ist, und ein ID-Geber (21 ), den der Benutzer bei sich trägt, vorgesehen ist, wobei die Authentifizierungsabfrage zwischen dem ID-Geber (21 ) und der Kontrolleinheit (20) erfolgt, wobei nur bei einer positiven Authentifizierung der Tankverschluss (10) in den Entriegelungszustand (1) bringbar ist, bei dem die Verschlusseinheit (12) in die Offenposition (4) sich bewegt, wobei das Auslöseelement (5) an der Lenkungseinheit des Kraftfahrzeuges angeordnet ist, wobei bei einer nicht möglichen Authentifizierung ein Notzugang über einen mechanischen Schlüssel, der am ID-Geber (21) angeordnet ist, ermöglicht ist.

2. Sicherheitssystem nach einem der vorhergehenden Ansprüche,
**dadurch gekennzeichnet,**
**dass** die Kontrolleinheit (20) als schlüssellos wirkendes Zugangs- und/oder Fahrberechtigungskontrollsystem ausgeführt ist.

3. Tankverschluss (10) für einen Kraftstofftank eines Kraftfahrzeuges, insbesondere eines Motorrads, wobei der Tankverschluss (10) in einen Entriegelungszustand (1) und einen Verriegelungszustand (2) bringbar ist, mit einer zum Verschließen einer Tanköffnung (11) des Kraftstofftankes vorgesehenen Verschlusseinheit (12), die über einen Antrieb (30) zwischen einer Schließposition (3), in der die Tanköffnung (11) vollständig verschlossen ist, und einer Offenposition (4) bewegbar ist, in der die Tanköffnung (11) zum Befüllen des Kraftstofftankes freigegeben ist,
**dadurch gekennzeichnet,**
**dass** ein an der Verschlusseinheit (12) angeordnetes Auslöseelement (5) vorgesehen ist, das für eine Authentifizierungsabfrage zur Tankverschlusszugangskontrolle aktivierbar ist, und und dass die Authentifizierungsabfrage zwischen einem ID-Geber (21), den der Benutzer bei sich trägt, und einer Kontrolleinheit (20) erfolgt, und nur bei einer positiven Authentifizierung der Tankverschluss (10) in den Entriegelungszustand (1) bringbar ist, bei dem die Verschlusseinheit (12) in die Offenposition (4) bewegbar ist, wobei bei einer nicht moglichen Authentifizierung ein Notzugang über einen mechanischen Schlüssel, der am ID-Geber (21) angeordnet ist, ermöglicht ist.

4. Tankverschluss (10) nach Anspruch 3,
**dadurch gekennzeichnet,**
**dass** die Verschlusseinheit (12) einen Schalter (14) aufweist, auf den das Auslöseelement (5) nach einer manuellen Betätigung wirkt und/oder dass an der Verschlusseinheit (12) ein mechanisches Riegelelement (15) angeordnet ist, auf das der Antrieb (30) wirkt.

5. Tankverschluss (10) nach einem der vorhergehenden Ansprüche,
**dadurch gekennzeichnet,**
**dass** ein Schließzylinder (16) mit dem Riegelelement (15) in Wirkverbindung steht, wodurch eine mechanische Notentriegelung des Tankverschlusses (10) erzielbar ist.

6. Tankverschluss (10) nach Anspruch 5,
**dadurch gekennzeichnet,**
**dass** das Auslöseelement (5) als Schutzklappe für den Schließzylinder (16) wirkt, das in seiner Ruhestellung (6) den Schließzylinder (16) schützend abschirmt.

7. Verfahren einer schlüssellosen Zugangskontrolle für einen Tankverschluss (10) eines Kraftfahrzeuges, insbesondere eines Motorrads, der in einen Entriegelungszustand (1) und einen Verriegelungszustand (2) bringbar ist,
**dadurch gekennzeichnet,**
**dass** über eine bewusste Aktivierung eines Auslöseelementes (5), das in Datenkommunikation mit einer Kontrolleinheit (20) steht, eine Authentifizierungsabfrage der Kontrolleinheit (20) aktiviert wird, und
**dass** die Authentifizierungsabfrage zwischen einem ID-Geber (21), den der Benutzer bei sich trägt, und der Kontrolleinheit (20. ) erfolgt, nur bei einer positiven Authentifizierung ein Signal einem am Tankverschluss (10) angeordneten Antrieb (30) übermittelt wird, der den Tankverschluss (10) aus dem Verriegelungszustand (2) in den Entriegelungszustand (1) bringt, wobei bei einer nicht moglichen Authentifizierung ein Notzugang über einen mechanischen Schlüssel, der am ID-Geber (21) angeordnet ist, ermöglicht ist.

8. Verfahren nach Anspruch 7,
**dadurch gekennzeichnet,**
**dass** nach der Entriegelung des Tankverschlusses (10) der Antrieb (30) in seine Ausgangslage zurückfährt, so dass eine erneute Entriegelung möglich ist.

9. Verfahren nach einem der vorhergehenden Ansprüche,
**dadurch gekennzeichnet,**
**dass** die Authentifizierungsabfrage kapazitiv und/oder induktiv erfolgt.

10. Verfahren nach einem der vorhergehenden Ansprüche,
**dadurch gekennzeichnet,**
**dass** die Aktivierung des Auslöseelementes (5) über einen Näherungssensor oder einen Berührungssensor erfolgt.

11. Verfahren nach einem der vorhergehenden Ansprüche mit einem Tankverschluss (10) nach einem der Ansprüche 3 bis 6.

## Claims

1. Safety system with a fuel cap (10) of a fuel tank of a motorcycle wherein the fuel cap (10) is shiftable into an unlocking state (1) and a locking state (2) with a closing unit (12) intended for closing a fuel opening (11) of the fuel tank which is movable via a drive (30) between a closing position (3) in which the fuel opening (11) is completely closed and an opening position (4) in which the fuel opening (11) is released for filling the fuel tank and a control unit (20) which is in data communication with the fuel cap (10)
**characterized in that**
a release element (5) is intended which is activatable for an authentication query of the control unit (20) and an identification device (21) which the user carries along is intended, wherein the authentication query occurs between the identification device (21) and the control unit (20), wherein only with a positive authentication the fuel cap (10) is shiftable into an unlocking state (1) with which the closing unit (12) is moved into the open position (4), wherein the release element (5) is assembled at the steering unit of the motor vehicle, wherein with a not possible authentication an emergency access via a mechanic key is enabled which is assembled at the identification device (21).

2. Safety system according to one of the preceding claims
**characterized in that**
the control unit (20) is configured as a keyless acting access and/or driving authorization control system.

3. Fuel cap (10) for a fuel tank of a motor vehicle, particularly a motorcycle, wherein the fuel tank (10) is shiftable into an unlocking state (1) and a locking state (2) with a closing unit (12) intended for closing a fuel opening (11) at the motor vehicle which is movable via a gear between a closing position (3) in which the fuel opening (11) is completely closed and an opening position (4) in which the fuel opening (11) is released for filling the fuel tank
**characterized in that**
a release element (5) assembled at the closing unit (12) is intended, which is activatable for an authentication query for the fuel cap access control and that the authentication query between the identification device (21) which is carried along by the user and a control unit occurs by a control unit (20) and only with the positive authentication the fuel cap (10) is shiftable into an unlocking state (1) with which the closing unit (12) is movable into the open position (4), wherein with a not possible authentication an emergency access is enabled via a mechanic key which is assembled at the identification device (21).

4. Fuel cap (10) according to claim 3
**characterized in that**
the closing unit (12) comprises a switch (14) to which the release element (5) acts after a manual actuation and/or that at the closing unit (12) a mechanic latch element (15) is assembled on which the drive (40) acts.

5. Fuel cap (10) according to one of the preceding claims
**characterized in that**
the closing cylinder (16) is in operative connection with the latch element (15), wherein a mechanic emergency release of the tank cap (10) is achieveable.

6. Tank cap (10) according to claim 5
**characterized in that**
the release element (5) acts as a protection cap for the closing cylinder (16) which in its resting position (6) protectively shields the closing cylinder (16).

7. Method for a keyless access control of a fuel cap (10) of a motor vehicle, particularly a motorcycle, which is shiftable into an unlocking state (1) and a locking state (2)
**characterized in that**
via a conscious activation of the release element (5) which is in data communication with the control unit (20) an authentication query of the control unit (20) is activated and that the authentication query between the identification device (21) which is carried along by the user and the control unit (20) occurs only with the positive authentication a signal is transmitted to a drive (30) assembled at the fuel cap (10) which transfers the fuel cap (10) from the locking state (2) into the unlocking state (1), wherein with a not possible authentication an emergency access is enabled via a mechanic key which is assembled at the identification device (21).

8. Method according to claim 7
**characterized in that**
after unlocking of the fuel cap (10) the drive (30) retracts into the starting position such that a repeated unlocking is enabled.

9. Method according to one of the preceding claims
**characterized in that**
the authentication query occurs capacitive and/or inductive.

10. Method according to one of the preceding claims
**characterized in that**
the activation of the release element (5) occurs via a proximity sensor or a contact sensor.

11. Method according to one of the preceding claims with a fuel cap (10) according to one of claims 3 to 6.

## Revendications

1. Système de sécurité incluant un bouchon (10) de réservoir de carburant d'une motocyclette, ledit bouchon (10) de réservoir pouvant être amené à un état déverrouillé (1) et à un état verrouillé (2), comprenant
une unité d'obturation (12) prévue pour occulter un orifice (11) du réservoir de carburant et pouvant être mue, par l'intermédiaire d'un entraînement (30), entre un emplacement de fermeture (3) auquel ledit orifice (11) du réservoir est intégralement occulté, et un emplacement d'ouverture (4) auquel ledit orifice (11) est dégagé en vue du remplissage dudit réservoir de carburant,
et une unité de contrôle (20) en communication par données avec ledit bouchon (10) du réservoir, **caractérisé par**
la présence d'un élément déclencheur (5), pouvant être activé en vue d'une requête d'authentification de l'unité de contrôle (20), et d'un transmetteur d'identification (21) porté par l'utilisateur, ladite requête d'authentification s'opérant entre ledit transmetteur d'identification (21) et ladite unité de contrôle (20), sachant que
le bouchon (10) du réservoir peut être amené, uniquement dans le cas d'une authentification positive, à l'état déverrouillé (1) dans lequel l'unité d'obturation (12) se meut vers l'emplacement d'ouverture (4), l'élément déclencheur (5) étant placé sur l'unité de direction du véhicule automobile, un accès d'urgence étant rendu possible, en cas d'impossibilité d'authentification, par l'intermédiaire d'une clé mécanique implantée sur ledit transmetteur d'identification (21).

2. Système de sécurité selon l'une des revendications précédentes,
**caractérisé par le fait**
**que** l'unité de contrôle (20) est réalisée en tant que système de contrôle d'accès et/ou d'autorisation de conduite, agissant sans clé.

3. Bouchon (10) dévolu à un réservoir de carburant d'un véhicule automobile, en particulier d'une motocyclette, ledit bouchon (10) de réservoir pouvant être amené à un état déverrouillé (1) et à un état verrouillé (2), comprenant
une unité d'obturation (12) prévue pour occulter un orifice (11) du réservoir de carburant et pouvant être mue, par l'intermédiaire d'un entraînement (30), entre un emplacement de fermeture (3) auquel ledit orifice (11) du réservoir est intégralement occulté, et un emplacement d'ouverture (4) auquel ledit orifice (11) est dégagé en vue du remplissage dudit réservoir de carburant,
**caractérisé par le fait**
**qu'**il est prévu un élément déclencheur (5), disposé sur l'unité d'obturation (12) et pouvant être activé en vue d'une requête d'authentification ciblant le contrôle d'un accès au bouchon du réservoir ; et par le fait
**que** ladite requête d'authentification s'opère entre une unité de contrôle (20) et un transmetteur d'identification (21) porté par l'utilisateur, sachant que ledit bouchon (10) du réservoir peut être amené, uniquement dans le cas d'une authentification positive, à l'état déverrouillé (1) dans lequel ladite unité d'obturation (12) peut être mue vers l'emplacement d'ouverture (4), un accès d'urgence étant rendu possible, en cas d'impossibilité d'authentification, par l'intermédiaire d'une clé mécanique implantée sur ledit transmetteur d'identification (21).

4. Bouchon (10) de réservoir, selon la revendication 3,
**caractérisé par le fait**
**que** l'unité d'obturation (12) présente un interrupteur (14) sur lequel l'élément déclencheur (5) agit après un actionnement manuel ; et/ou par le fait qu'un élément mécanique de verrouillage (15), sur lequel l'entraînement (30) agit, est disposé sur ladite unité d'obturation (12).

5. Bouchon (10) de réservoir, selon l'une des revendications précédentes,
**caractérisé par le fait**
**qu'**un cylindre de fermeture (16) est en liaison opérante avec l'élément de verrouillage (15), permettant ainsi d'obtenir un déverrouillage mécanique d'urgence dudit bouchon (10) du réservoir.

6. Bouchon (10) de réservoir, selon la revendication 5,
**caractérisé par le fait**
**que** l'élément déclencheur (5) agit comme un volet de protection destiné au cylindre de fermeture (16) et procure, dans sa position de repos (6), un écran protecteur dédié audit cylindre de fermeture (16).

7. Procédé de contrôle d'accès sans clé, destiné à un bouchon (10) de réservoir d'un véhicule automobile, en particulier d'une motocyclette, qui peut être amené à un état déverrouillé (1) et à un état verrouillé (2),
**caractérisé par le fait**
**qu'**une requête d'authentification d'une unité de contrôle (20) est activée sous l'effet d'une activation délibérée d'un élément déclencheur (5) en communication par données avec ladite unité de contrôle (20) ; et
par le fait que ladite requête d'authentification s'opère entre ladite unité de contrôle (20) et un transmetteur d'identification (21) porté par l'utilisateur,
un signal étant délivré, uniquement dans le cas d'une authentification positive, à un entraînement (30) disposé sur le bouchon (10) du réservoir et amenant ledit bouchon (10) du réservoir à l'état déverrouillé (1), à partir de l'état verrouillé (2), un accès d'urgence étant rendu possible, en cas d'impossibilité d'authentification, par l'intermédiaire d'une clé mécanique implantée sur ledit transmetteur d'identification (21).

8. Procédé selon la revendication 7,
**caractérisé par le fait**
**que** l'entraînement (30) retourne à sa position initiale après le déverrouillage du bouchon (10) du réservoir, permettant ainsi un déverrouillage réitéré.

9. Procédé selon l'une des revendications précédentes,
**caractérisé par le fait**
**que** la requête d'authentification s'opère en mode capacitif et/ou inductif.

10. Procédé selon l'une des revendications précédentes,
**caractérisé par le fait**
**que** l'activation de l'élément déclencheur (5) s'effectue par l'intermédiaire d'un capteur de proximité ou d'un détecteur de contact.

11. Procédé selon l'une des revendications précédentes, associé à un bouchon (10) de réservoir conforme à l'une des revendications 3 à 6.
